(19) Europäisches Patentamt
European Patent Office
Office européen des brevets

(11) EP 4 629 377 A1

# (12) EUROPEAN PATENT APPLICATION

(43) Date of publication:
**08.10.2025 Bulletin 2025/41**

(21) Application number: **25168492.4**

(22) Date of filing: **04.04.2025**

(51) International Patent Classification (IPC):
***H01M 10/052*** *(2010.01)* ***H01M 50/42*** *(2021.01)*
***H01M 50/443*** *(2021.01)* ***H01M 50/449*** *(2021.01)*

(52) Cooperative Patent Classification (CPC):
**H01M 50/449; H01M 10/052; H01M 50/42; H01M 50/443**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.04.2024 KR 20240045762**

(71) Applicant: **SAMSUNG SDI CO., LTD.**
**Yongin-si, Gyeonggi-do 17084 (KR)**

(72) Inventors:
- **Kim, Ga In**
  **Suwon-si, Gyeonggi-do 16678 (KR)**
- **Seo, Dong Wan**
  **Suwon-si, Gyeonggi-do 16678 (KR)**
- **Gu, Ja Yeon**
  **Suwon-si, Gyeonggi-do 16678 (KR)**

(74) Representative: **Gulde & Partner**
**Patent- und Rechtsanwaltskanzlei mbB**
**Berliner Freiheit 2**
**10785 Berlin (DE)**

## (54) SEPARATOR FOR RECHARGEABLE LITHIUM BATTERY AND RECHARGEABLE LITHIUM BATTERY INCLUDING THE SAME

(57) The separator for a rechargeable lithium battery includes a porous substrate, and a coating layer located on at least one surface of the porous substrate and including a binder and an inorganic filler. The binder includes a (meth)acryl-based binder including a first structural unit derived from (meth)acrylic acid, (meth) acrylate, or a salt thereof, a second structural unit derived from hydroxyalkyl (meth)acrylate, and a third structural unit derived from (meth)acrylamido sulfonic acid or a salt thereof. The inorganic filler includes a first cubic inorganic filler having an average particle diameter D50 ranging from 50 nm to 250 nm.

EP 4 629 377 A1

## Description

BACKGROUND

### 1. Field of the Disclosure

The present disclosure relates to a separator for a rechargeable lithium battery, and a rechargeable lithium battery including the separator.

### 2. Discussion of Related Art

With increasing presence of electronic devices using batteries, such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery typically includes a positive electrode and a negative electrode that include an active material capable of the intercalation and deintercalation of lithium ions, and produces electrical energy by oxidation and reduction reactions when the lithium ions are intercalated into and deintercalated from the positive electrode and the negative electrode.

The rechargeable lithium battery may further include a separator between the positive electrode and the negative electrode. The separator may have a low membrane resistance, and a high heat resistance, resulting in low heat shrinkage.

SUMMARY

The invention is defined by the appended claims. The description that follows is subjected to this limitation. Any disclosure lying outside the scope of said claims is only intended for illustrative as well as comparative purposes.

One example embodiment includes a separator for a rechargeable lithium battery that increases the capacity of a rechargeable lithium battery by having low membrane resistance.

Another example embodiment includes a separator for rechargeable lithium battery that increases the stability and lifetime of the rechargeable lithium battery by having a low heat shrinkage rate.

Still another example embodiment includes a rechargeable lithium battery including the separator for a rechargeable lithium battery.

Another example embodiment includes a separator for a rechargeable lithium battery.

1. The separator for a rechargeable lithium battery includes a porous substrate, and a coating layer located on at least one surface of the porous substrate and including a binder and an inorganic filler. The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof. The inorganic filler includes a first inorganic filler being cubic type and having an average particle diameter D50 ranging from 50 nm to 250 nm.

2. In 1, with respect to 100 mol% of the (meth)acryl-based binder, the first structural unit is included in an amount ranging from 25 mol% to 65 mol%, the second structural unit is included in an amount ranging from 1 mol% to 20 mol%, and the third structural unit is included in an amount ranging from 20 mol% to 65 mol%.

3. In 1-2, the first structural unit is represented by any one of Chemical Formulas 1 to 3 below, the second structural unit is represented by Chemical Formula 4 below, and the third structural unit is represented by Chemical Formulas 5 to 7 below:

Chemical Formula 1: Chemical Formula 2: Chemical Formula 3:

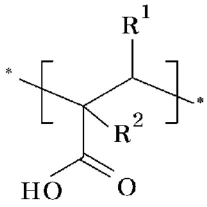

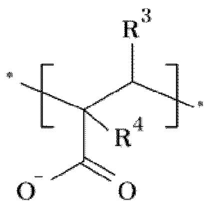

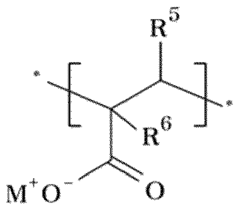

Chemical Formula 4:

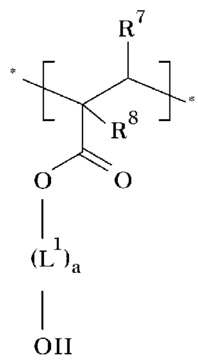

Chemical Formula 5: Chemical Formula 6: Chemical Formula 7:

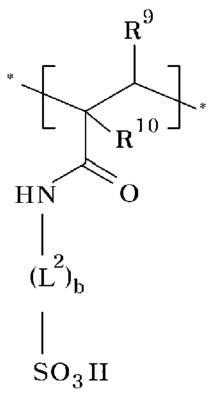

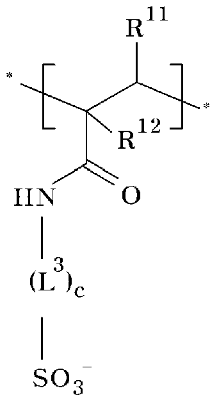

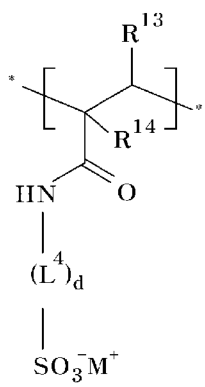

.

In Chemical Formulas 1 to 7,

$R^1$ to $R^{14}$ each independently is or includes hydrogen or a C1 to C10 alkyl group,
$L^1$ to $L^4$ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, and d are each independently an integer ranging from 0 to 2, and
M is or includes an alkali metal.

4. In 1-3, the (meth)acryl-based binder is represented by Chemical Formula 8 below:

Chemical Formula 8:

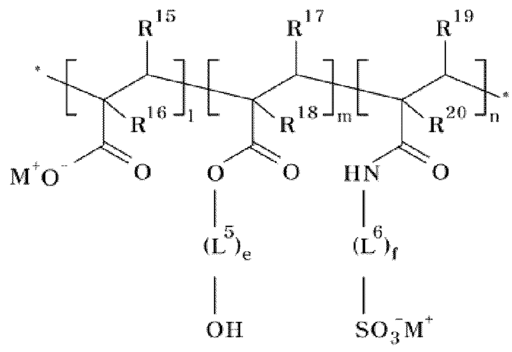

.

$R^{15}$ to $R^{20}$ each independently is or includes hydrogen or a C1 to C10 alkyl group,

$L^5$ and $L^6$ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
M is or includes an alkali metal,
e and f are each independently an integer ranging from 0 to 2, and
l, m, and n are a molar ratio of each unit and l+m+n=1.

5. In 1-4, with respect to 100 mol% of the (meth)acryl-based binder, a total of the first structural unit, the second structural unit, and the third structural unit is equal to 95 mol% or more.
6. In 1-5, the (meth)acryl-based binder and the first inorganic filler are included in a mass ratio of 1:10 to 1:50.
7. In 1-6, the first inorganic filler includes at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof.
8. In 1-7, the inorganic filler further includes a second inorganic filler, and the second inorganic filler has a larger average particle diameter D50 than the average particle diameter D50 of the first inorganic filler.
9. In 1-8, the second inorganic filler has an average particle diameter D50 ranging from 100 nm to 350 nm.
10. In 1-9, the second inorganic filler is amorphous.
11. In 1-10, the (meth)acryl-based binder and the second inorganic filler are included in a mass ratio in a range of 1:10 to 1:50.
12. In 1-11, the second inorganic filler includes at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof.
13. In 1-12, the first inorganic filler and the second inorganic filler are included in a part by weight ratio of 20 to 80 : 20 to 80 with respect to a total of 100 parts by weight of the first inorganic filler and the second inorganic filler.
14. In 1-13, the coating layer has a thickness ranging from 0.5 $\mu$m to 2 $\mu$m.

According to another example embodiment, a rechargeable lithium battery includes a positive electrode, a negative electrode, and the separator for a rechargeable lithium battery located between the positive electrode and the negative electrode.

BRIEF DESCRIPTION OF THE DRAWINGS

FIG. 1 is an enlarged cross-sectional view of a first inorganic filler.
FIG. 2 is a cross-sectional view of a second inorganic filler.
FIG. 3 is a conceptual diagram of a separator for a rechargeable lithium battery, according to one example embodiment.
FIGS. 4 to 7 are schematic cross-sectional views illustrating a rechargeable lithium battery, according to one example embodiment.
FIGS. 8A and 8B are enlarged cross-sectional views of a coating layer in Example 1 taken with a scanning electron microscope (SEM), with FIG. 8A showing the results with 10x magnification, and FIG. 8B showing the results with 20x magnification.
FIGS. 9A and 9B are enlarged cross-sectional views of a coating layer in Comparative Example 4 taken with the SEM, with FIG. 9A showing the results with 10x magnification, and FIG. 9B showing the results with 20x magnification.

DETAILED DESCRIPTION

Hereinafter, example embodiments of the present disclosure are described in detail. However, the embodiments are presented as examples, the present disclosure is not limited thereto, and the present disclosure is only defined by the scope of the appended claims.
Unless otherwise stated herein, when a part such as a layer, a membrane, an area, a plate, etc. is described as being disposed "on" another part, it includes not only a case where the part is "directly on" another part, but also a case where there are other parts therebetween.
Unless otherwise stated herein, the singular may also include the plural.
In the present specification, "a combination thereof" may indicate a mixture, stack, composite, copolymer, alloy, blend, or reaction product of constituents.
Unless otherwise defined herein, a particle diameter is an average particle diameter. In addition, the particle diameter refers to an average particle diameter D50, which refers to a diameter of a particle with a cumulative volume of 50% by volume in a particle diameter distribution. The average particle diameter D50 may be measured by methods known

to those skilled in the art and for example, may be measured using a particle size analyzer, a transmission electron microscope photograph, or a scanning electron microscope photograph. As another method, the average particle diameter D50 may be obtained by measuring the particle diameter using a measuring device using dynamic light scattering, performing data analysis to count the number of particles for each particle size range, and then calculating the average particle diameter D50 therefrom. Alternatively, the average particle diameter D50 may be measured using a laser diffraction method. When measuring the average particle diameter by the laser diffraction method, for example, the average particle diameter D50 based on 50% of a particle diameter distribution in the measuring device is calculated by dispersing particles to be measured in a dispersion medium, then introducing the dispersion medium into a commercially available laser diffraction particle diameter measuring device (e.g., Microtrac's MT 3000), and radiating ultrasonic waves of 28 kHz with an output of 60 W. The laser diffraction method may be performed according to ISO 13320:2020. According to the IUPAC definition, the equivalent diameter of a non-spherical particle is equal to a diameter of a spherical particle that exhibits identical properties to that of the investigated non-spherical particle.

In the present specification, "(meth)acryl" refers to acryl and/or methacryl.

Hereinafter, unless otherwise defined, "substitution" indicates that hydrogen in a compound is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

Hereinafter, the C1 to C3 alkyl group may be or include at least one of a methyl group, an ethyl group, or a propyl group. The C1 to C10 alkylene group may be or include, for example, at least one of a C1 to C6 alkylene group, a C1 to C5 alkylene group, or a C1 to C3 alkylene group and may be or include, for example, at least one of a methylene group, an ethylene group, or a propylene group. The C3 to C20 cycloalkylene group may be or include, for example, a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Unless otherwise specified herein, "alkyl group" indicates a C1 to C20 alkyl group, "alkenyl group" indicates a C2 to C20 alkenyl group, "cycloalkenyl group" indicates a C3 to C20 cycloalkenyl group, "heterocycloalkenyl group" indicates a C3 to C20 heterocycloalkenyl group, "aryl group" indicates a C6 to C20 aryl group, "arylalkyl group" indicates a C6 to C20 arylalkyl group, "alkylene group" indicates a C1 to C20 alkylene group, "arylene group" indicates a C6 to C20 arylene group, "alkylarylene group" indicates a C6 to C20 alkylarylene group, "heteroarylene group" indicates a C3 to C20 heteroarylene group, and "alkoxylene group" indicates a C1 to C20 It refers to an alkoxylene group.

Hereinafter, "hetero" indicates including one or more heteroatoms such as or including at least one of N, O, S, Si, and P.

In addition, in the chemical formulas, the symbol * refers to a part that is connected to the same or different atom, group, or structural unit.

In this specification, the weight average molecular weight (Mw) may be a value measured using, e.g., gel permeation chromatography (GPC).

Hereinafter, "alkali metal" refers to an element belonging to Group 1 of the periodic table, such as lithium, sodium, potassium, rubidium, cesium, or francium and may be present in a cationic or neutral state.

In the present specification, when describing a numerical range, "X to Y" indicates "X or more and Y or less ($X\leq$ and $\leq Y$)."

A separator for a rechargeable lithium battery according to one example embodiment may exhibit low membrane resistance and a low heat shrinkage rate, thereby increasing the capability, stability, and lifetime of the battery.

The separator for a rechargeable lithium battery includes a porous substrate, and a coating layer located on at least one surface of the porous substrate and including a binder and an inorganic filler, wherein the binder includes a (meth) acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof, and the inorganic filler includes a first inorganic filler being cubic type and having an average particle diameter ranging from 50 nm to 250 nm.

The separator for a rechargeable lithium battery may exhibit low membrane resistance by including the (meth)acryl-based binder. According to one example embodiment, the separator may have a membrane resistance in a range of 0.6 Ω or less.

The separator for a rechargeable lithium battery may include the (meth)acryl-based binder and the first inorganic filler, thereby increasing coating density and providing a low heat shrinkage rate and high heat resistance. According to one example embodiment, a shrinkage rate in each of a machine direction (MD) and a transverse direction (TD) of the separator may be 3.5% or less, for example, 2% or less or 1.5% or less after the separator is left at 150 °C for 1 hour. Within the above range, even when the battery is left at high temperature for a long time, the heat shrinkage rate of the separator may be low, thereby increasing the stability and lifetime of the battery.

According to one example embodiment, the coating layer may be formed of or include a composition including a binder including the (meth)acryl-based binder, and a filler including the first inorganic filler.

The coating layer includes a binder and a filler, which is described below.

**Binder**

The binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof.

The (meth)acryl-based binder exhibits high heat resistance and low membrane resistance. Therefore, when the (meth)acryl-based binder is applied to the coating layer of the separator, a rechargeable lithium battery with desired or improved lifetime characteristics at room temperature and/or high temperature can be implemented.

According to one example embodiment, the (meth)acryl-based binder may be included in an amount in a range of 95 wt% or more, for example, ranging from 95 wt% to 100 wt% or 100 wt% of the total binder included in the coating layer.

With respect to 100 mol% of the (meth)acryl-based binder, a total of the first structural unit, the second structural unit, and the third structural unit may be in a range of 95 mol% or more, for example, may range from 95 mol% to 100 mol%, or may be 100 mol%. Within the above range, the above effects of the separator can be readily achieved.

Description of the (meth)acryl-based binder is as follows.

With respect to 100 mol% of the (meth)acryl-based binder, the first structural unit may be included in an amount ranging from 25 mol% to 65 mol%, for example 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 mol%, from 30 to 65 mol%, from 40 to 65 mol%, or from 30 to 60 mol%. Within the above range, it is possible to improve the dispersibility of the binder in the coating layer and readily increase heat resistance.

The first structural unit may be derived from (meth)acrylic acid, (meth)acrylate, or a salt thereof, and may be configured to fix the filler on the porous substrate, and also provide bonding strength so that the coating layer is bonded to the porous substrate and the electrode. In addition, the first structural unit may contribute to increasing the heat resistance and air permeability of the separator. In addition, the first structural unit may include a carboxyl functional group (-C(=O)O-) in the structural unit, thereby contributing to improving the dispersibility of a coating slurry.

The first structural unit may be represented by any one of Chemical Formulas 1 to 3 below:

Chemical Formula 1: Chemical Formula 2: Chemical Formula 3:

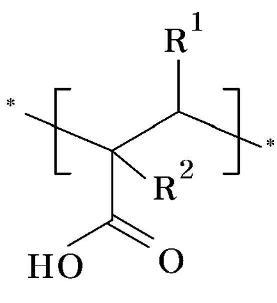

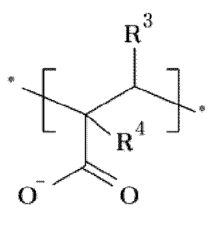

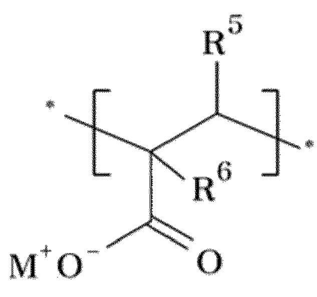

.

With respect to 100 mol% of the (meth)acryl-based binder, the second structural unit may be included in an amount ranging from 1 mol% to 20 mol%, for example 1, 2, 3, 4, 5, 6, 7, 8, 9, 10, 11, 12, 13, 14, 15, 16, 17, 18, 19, 20 mol%, or from 5 to 15 mol%. Within the above range, it is possible to increase the adhesion of the coating layer to the porous substrate.

The second structural unit may be derived from hydroxyalkyl (meth)acrylate and may be configured to fix the filler on the porous substrate, and may also provide bonding strength so that the coating layer is bonded to the porous substrate and the electrode. In addition, the second structural unit may include a carboxyl functional group (-C(=O)O-) in the

structural unit, thereby contributing to improving the dispersibility of a coating slurry.

The second structural unit may be represented by Chemical Formula 4 below:

Chemical Formula 4:

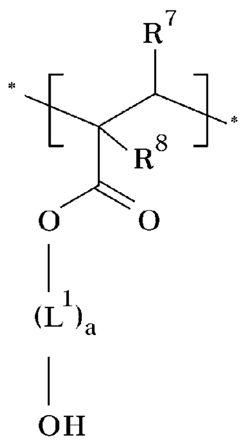

With respect to 100 mol% of the (meth)acryl-based binder, the third structural unit may be included in a higher number of moles than the first structural unit and the second structural unit. This may facilitate the provision of low membrane resistance by increasing the mobility of lithium ions in the coating layer.

According to one example embodiment, with respect to 100 mol% of the (meth)acryl-based binder, the third structural unit may be included in an amount ranging from 20 mol% to 65 mol%, for example 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 mol%, or from 30 to 60 mol%. Within the above range, the coating layer may reduce membrane resistance by increasing the mobility of lithium ions.

The third structural unit may include a bulky functional group derived from (meth)acrylamido sulfonic acid or a salt thereof, thereby increasing the heat resistance of the separator by the effect of increasing a glass transition temperature. Additionally, when the third structural unit includes a functional group derived from a salt of (meth)acrylamido sulfonic acid, a metal (M) or cations of the metal, for example, lithium cations, may move through the third structural unit by the sulfonic acid functional group in which the metal (M) is substituted, thereby reducing resistance.

The third structural unit may be represented by Chemical Formulas 5 to 7 below:

Chemical Formula 5: Chemical Formula 6: Chemical Formula 7:

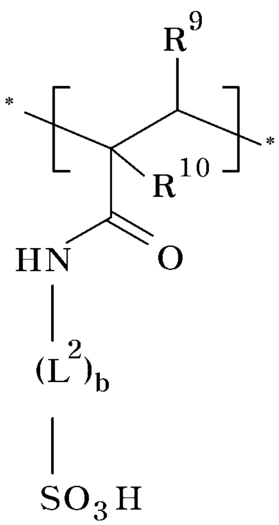

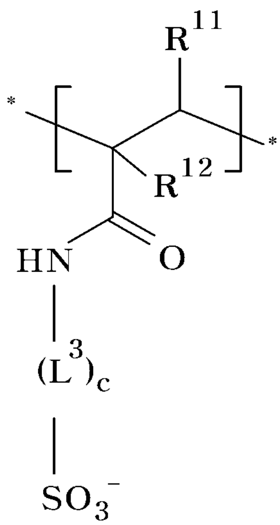

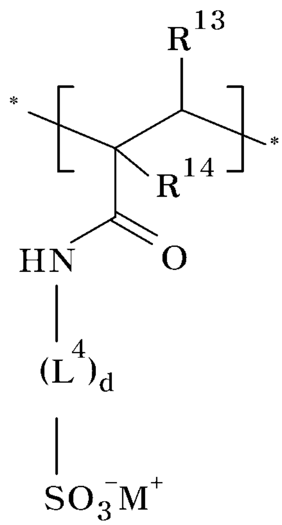

Descriptions of Chemical Formulas 1 to 7 are as follows.

$R^1$ to $R^{14}$ are each independently hydrogen or a C1 to C10 alkyl group, for example, a methyl group. For example, $R^1$ to $R^7$ and $R^9$ to $R^{14}$ may each be or include hydrogen, and $R^8$ may be or include a methyl group.

$L^1$ to $L^4$ each independently is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be or include a methylene group or an ethylene group, and $L^2$ to $L^4$ may each independently be or include *-$C(CH_3)_2$-$CH_2$-*.

a, b, c, and d are each independently an integer ranging from 0 to 2. For example, a, b, c, and d may all be equal to 1.

M is an alkali metal, and the alkali metal may be lithium, sodium, potassium, rubidium, or cesium. For example, M may be or include lithium or sodium.

Representative examples of the (meth)acryl-based binder according to one example embodiment are as follows:

Chemical Formula 8:

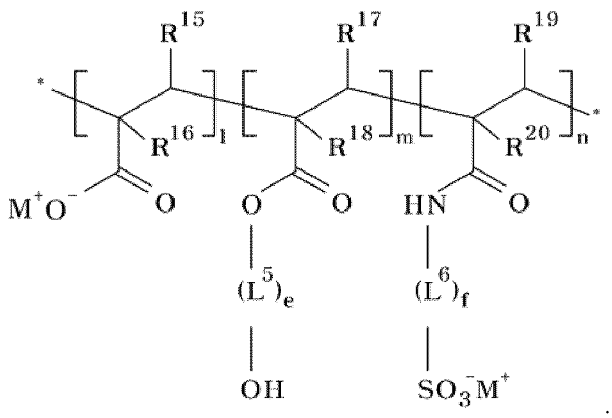

Description of Chemical Formula 8 is as follows.

$R^{15}$ to $R^{20}$ are each independently hydrogen or a C1 to C10 alkyl group, for example, a methyl group. For example, $R^{15}$ to $R^{17}$ and $R^{19}$ and $R^{20}$ may each be or include hydrogen, and $R^{18}$ may be or include a methyl group.

$L^5$ and $L^6$ each independently is a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be or include a methylene group or an ethylene group, and $L^6$ may be or include *-$C(CH_3)_2$-$CH_2$-*.

M is an alkali metal, and the alkali metal may be or include at least one of lithium, sodium, potassium, rubidium, or cesium. For example, M may be or include lithium or sodium.

e and f are each independently an integer ranging from 0 to 2. For example, e and f may both be equal to 1.

l, m, and n are a molar ratio of each unit, and l+m+n=1. For example, l, m, and n may be $0.3 \leq l \leq 0.65$, $0.01 \leq m \leq 0.2$, and $0.2 \leq n \leq 0.65$, or may be $0.3 \leq l \leq 0.6$, $0.05 < m < 0.15$, and $0.3 \leq n \leq 0.6$.

The (meth)acryl-based binder may have a weight average molecular weight ranging from 100,000 g/mol to 1,000,000 g/mol, from 100,000 g/mol to 500,000 g/mol, from 100,000 g/mol to 150,000 g/mol, from 200,000 g/mol to 130,000 g/mol, or from 300,000 g/mol to 900,000 g/mol. When the above range is satisfied, a separator including a binder for a rechargeable lithium battery according to one example embodiment may exhibit desired or improved bonding strength and low resistance.

The (meth)acryl-based binder may include an alkali metal. The alkali metal may be present in the form of a cation and for example, may be or include at least one of lithium, sodium, potassium, rubidium, or cesium. For example, the alkali metal may be combined with the (meth)acryl-based binder and may be present in the form of a salt. The alkali metal may assist in the synthesis of the (meth)acryl-based binder in an aqueous solvent, increase the bonding strength of the coating layer, and increase the heat resistance, air permeability, oxidation resistance, etc. of the separator.

The alkali metal may be included in an amount ranging from 1 wt% to 40 wt% of the alkali metal and the (meth)acryl-based binder, for example, from 1 wt% to 30 wt%, from 1 wt% to 20 wt%, or from 10 wt% to 20 wt%. For example, the (meth)acryl-based binder and the alkali metal may be included in a weight ratio of 99:1 to 60:40, a weight ratio of 99:1 to 70:30, for example, a weight ratio of 99:1 to 80:20, for example, a weight ratio of 90:10 to 80:20.

The alkali metal may be included in an amount ranging from 0.1 mol% to 1.0 mol% of the total content of the alkali metal and the (meth)acryl-based binder. When the alkali metal is included within the above range, the coating layer can have a desired or improved bonding strength, and a separator including the coating layer may exhibit desired or improved

heat resistance, air permeability, and oxidation resistance.

The (meth)acryl-based binder may be in various forms, such as an alternating polymer in which the units are alternately distributed, a random polymer in which the units are randomly distributed, or a graft polymer in which some structural units are grafted.

According to one example embodiment, the (meth)acryl-based binder may be prepared by a solution polymerization method.

## Inorganic filler

The inorganic filler includes a first inorganic filler being cubic type having a particle diameter D50 ranging from 50 nm to 250 nm.

FIG. 1 is an enlarged cross-sectional view of a first inorganic filler. Referring to FIG. 1, the cubic inorganic filler may have a three-dimensional shape in which each substantially entire surface forming the inorganic filler has a substantially rectangular or substantially square shape.

The first inorganic filler is cubic and thus may increase coating density by ensuring that there are no uncoated portions when the porous substrate is coated with a composition including the binder and the inorganic filler. In addition, since the first inorganic filler has a low average particle diameter and a low specific surface area, the moisture content is low. Therefore, the first inorganic filler can be advantageous in reducing the heat shrinkage rate of the separator. The first inorganic filler can be advantageous in increasing the coating density when the particle diameter D50 is 50 nm or more, and may increase the coating density and reduce the heat shrinkage rate when the particle diameter D50 is 250 nm or less.

For example, the first inorganic filler may have a particle diameter D50 ranging from 100 nm to 250 nm, for example, 50, 60, 70, 80, 90, 100, 110, 120, 130, 140, 150, 160, 170, 180, 190, 200, 210, 220, 230, 240, 250 nm, from 150 to 250 nm, for example, 200 nm. For example, the first inorganic filler may have a specific surface area of 16 $m^2/g$ or less, for example, 1, 2, 3, 4, 5, 6, 7, 8, 9, 10, 11, 12, 13, 14, 15, 16 $m^2/g$ ranging from 1 $m^2/g$ to 16 $m^2/g$. Within the above range, the first inorganic filler can be advantageous in reducing the heat shrinkage rate of the separator due to a low specific surface area. The specific surface area may be a value calculated by, e.g., a Brunauer-Emmett-Teller (BET) method.

The first inorganic filler may be included in a desired content with respect to the binder, for example, the (meth) acryl-based binder. According to one example embodiment, the (meth)acryl-based binder and the first inorganic filler may be included in a mass ratio of 1:10 to 1:50, for example, 1:10, 1:15, 1:20, 1:25, 1:30, 1:35, 1:40, 1:45, 1:50, from 1:20 to 1:30. Within the above range, it is possible to achieve heat resistance, durability and low resistance effects.

According to one example embodiment, the first inorganic filler may be included in an amount in a range of 50 wt% or more, for example, ranging from 50 wt% to 100 wt%, or 100 wt% of the filler.

The inorganic filler may include a second inorganic filler having a particle diameter D50 ranging from 100 mm to 350 nm, and the average particle diameter D50 of the second inorganic filler is larger than the average particle diameter D50 of the first inorganic filler.

When the second inorganic filler is included in the coating layer together with the first inorganic filler, packing density may increase compared to when only the first inorganic filler is included in the coating layer, thereby further increasing the heat resistance of the separator. For example, the second inorganic filler may have an average particle diameter D50 ranging from 100 nm to 350 nm, and for example from100, 110, 120, 130, 140, 150, 160, 170, 180, 190, 200, 210, 220, 230, 240, 250, 260, 270, 280, 290, 300, 310, 320, 330, 340, 350nm, 200 to 350 nm, for example, from 250 to 350 nm, for example, 300 nm.

The second inorganic filler may be substantially spherical, substantially plate-shaped, substantially cubic, or amorphous. For example, the second inorganic filler may be amorphous.

FIG. 2 is an enlarged cross-sectional view of a second amorphous inorganic filler. Referring to FIG. 2, the amorphous inorganic filler has a non-uniform and irregular surface forming the filler.

The second inorganic filler may be included in a desired content with respect to the binder, for example, the (meth) acryl-based binder. According to one example embodiment, the (meth)acryl-based binder and the second inorganic filler may be included in a mass ratio of 1:10 to 1:50, 1:10, 1:15, 1:20, 1:25, 1:30, 1:35, 1:40, 1:45, 1:50, for example, from 1:20 to 1:30. Within the above range, it is possible to achieve heat resistance, durability and low resistance effects.

According to one example embodiment, the first inorganic filler and the second inorganic filler may be included in a part by weight ratio of 20 to 80 : 80 to 20, for example, 25 : 75, 30 : 70, 35: 65, 40 : 60, 45: 55, 50 : 50, 55: 45, 60 : 40, 65 : 35, 70 : 30, 75 : 25, 80 : 20, 40 to 60 : 40 to 60 with respect to the total of 100 parts by weight of the first inorganic filler and the second inorganic filler. Within the above range, the above effects of the separator can be readily achieved.

The first inorganic filler and the second inorganic filler may each be or include a ceramic material.

According to one example embodiment, the first inorganic filler and the second inorganic filler may each include, for example, at least one of a metal oxide, a metalloid oxide, a metal fluoride, a metal hydroxide, or a combination thereof. The first inorganic filler and the second inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not

limited thereto. For example, the first inorganic filler and the second inorganic filler may be or include a ceramic such as boehmite.

The filler, that is, the first inorganic filler alone, or the total of the first inorganic filler and the second inorganic filler, may be included in an amount ranging from 50 wt% to 99 wt%, for example, from 70 wt% to 99 wt%, for example, from 75 wt% to 99 wt%, for example, from 80 wt% to 99 wt%, for example, from 85 wt% to 99 wt%, for example, from 90 wt% to 99 wt%, for example, from 95 wt% to 99 wt% of the total amount of the coating layer. When the filler is included within the above range, the separator may exhibit desired or improved heat resistance, durability, oxidation resistance, and stability.

The coating layer may have a thickness ranging from 0.01 μm to 20 μm, and within the above range, may have a thickness ranging from 0.1 μm to 10 μm, 0.1 μm to 5 μm, or 0.5 μm to 2 μm.

A ratio of the thickness of the coating layer to the thickness of the porous substrate may range from 0.05 to 0.5, for example, from 0.05 to 0.4, from 0.05 to 0.3, or from 0.1 to 0.2. Within the above range, the separator may exhibit desired or improved air permeability, heat resistance, bonding strength, and the like. Herein, "thickness of the coating layer" is a thickness of one coating layer when the coating layer is formed on only one surface of the porous substrate, and is a thickness of two coating layers when the coating layer is formed on both surfaces of the porous substrate.

**Porous substrate**

The porous substrate may be or include a substrate having multiple pores and commonly included in electrochemical devices. The porous substrate may be or include a polymer membrane formed of or including any one polymer such as or including at least one of a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin, and the polyolefin-based substrate may have a desired or improved shutdown function, thereby contributing to increasing the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin or include a copolymer of olefin and non-olefin monomers.

The porous substrate may have a thickness ranging from 1 μm to 40 μm, for example, from 1 μm to 30 μm, from 1 μm to 20 μm, or from 5 μm to 15 μm.

The separator for a rechargeable lithium battery according to one example embodiment may exhibit a desired or improved air permeability and have an air permeability value of, for example, less than 200 sec/100 cc, for example, 190 sec/100 cc or less, or 180 sec/100 cc or less. That is, the separator may have an air permeability value of less than 40 sec/100 cc·1 μm per unit thickness, for example, 30 sec/100 cc·1 μm or less, or 25 sec/100 cc·1 μm or less. Here, the air permeability refers to the time (seconds) it takes for 100 cc of air to pass through the unit thickness of the separator. The air permeability per unit thickness may be obtained by measuring the air permeability for the total thickness of the separator and dividing the air permeability by the thickness. The air permeability may be obtained by measuring the time it takes for 100 cc of air to pass through the separator using an air permeability measurement device (EG01-55-1MR, Asahi Seiko Co., Ltd.).

The separator for a rechargeable lithium battery according to one example embodiment may be formed by applying a composition for forming a coating layer on one or both surfaces of the porous substrate, drying, and then curing the coating layer. The curing may be performed using conventional methods known to those skilled in the art.

FIG. 3 is a cross-sectional view showing a separator for a rechargeable lithium battery according to one example embodiment. Referring to FIG. 3, the separator for a rechargeable lithium battery includes a porous substrate 1 and a coating layer 2 located on both surfaces of the porous substrate 1. The coating layer 2 may include an inorganic filler 3 and a (meth)acryl-based binder 4.

<u>Rechargeable lithium battery</u>

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be located between the positive electrode and the negative electrode.

Positive electrode

A positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can be configured as a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be included.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.

The binder is configured to attach the positive electrode active material particles to each other, and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as natural graphite, artificial graphite, carbon black, acetylene black, ketjen black, a carbon fiber, a carbon nanofiber, and carbon nanotube; a metal-based material including at least one of copper, nickel, aluminum, silver, and the like, in a form of a metal powder or a metal fiber; a conductive polymer such as a polyphenylene derivative; or a mixture thereof.

Al may be included as the current collector, but is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode

active material, 0.5 wt% to 5 wt% of the binder, and 0 wt% to 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, substantially sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOx ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles, and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

The binder may be configured to attach the negative electrode active material particles to each other and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, etc. in a form of a metal powder or a metal fiber; a conductive polymer such as a polyphenylene derivative; or a mixture thereof.

The negative current collector may include at least one of a copper foil, a nickel foil, a stainless steel foil, a titanium

foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio of 1:1 to 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

FIGS. 4 to 7 are schematic views illustrating a rechargeable lithium battery, according to an example embodiment. FIG. 4 illustrates a cylindrical battery, FIG. 5 illustrates a prismatic battery, and FIGS. 6 and 7 illustrate pouch-type batteries. Referring to FIGS. 4 to 7, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 4. In FIG. 5, the rechargeable lithium battery 100 may include a positive lead tab 11, a positive terminal 12, a negative lead tab 21, and a negative terminal 22. As shown in FIGS. 6 and 7, the rechargeable lithium battery 100 may include an electrode tab 70 illustrated in FIG. 7, or, for example, a positive electrode tab 71 and a negative electrode tab 72 illustrated in FIG. 6, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely example embodiments of the present disclosure, and the present disclosure is not limited to the following examples.

**Synthesis Example 1: Poly(acrylic acid-co-2-hydroxyethyl methacrylate-co-2-acrylamido-2-methylpropane sulfonic acid) lithium salt (30:10:60)**

In a 3 L four-necked separable flask provided with a stirrer, a thermometer, and a cooling tube, adding distilled water (1249.72 g), a 20% aqueous lithium hydroxide solution (1.05 equivalents with respect to the total amount of acrylic acid and 2-methylpropane sulfonic acid), acrylic acid (21.60 g, 0.30 mol), 2-hydroxyethyl methacrylate (13.00 g, 0.10 mol), 2-acrylamido-2-methylpropane sulfonic acid (124.30 g, 0.6 mol), and ammonium persulfate (0.2 g, 0.001 mol) were added, then a process of reducing an internal pressure to 10 mmHg using a diaphragm pump, and returning the internal pressure

to a normal pressure using nitrogen was repeated three times.

The reaction was carried out for 12 hours while controlling the temperature of the reaction solution to be stable between 65 °C and 70 °C.

After cooling to room temperature, a non-volatile component (NV) in about 10 mL of the reaction solution was measured, and the measurement result was 9.8 wt% (theoretical value: 10wt%). In addition, in the poly(acrylic acid-co-2-hydroxyethyl methacrylate-co-2-acrylamido-2-methylpropane sulfonic acid) lithium salt acquired here, the first structural unit derived from acrylic acid, the second structural unit derived from 2-hydroxyethyl methacrylate, and the third structural unit derived from 2-acrylamido-2-methylpropane sulfonic acid were included in a molar ratio of 30:10:60.

**Synthesis Example 2: Poly(acrylic acid-co-2-hydroxyethyl methacrylate-co-2-acrylamido-2-methylpropane sulfonic acid) lithium salt (40:10:50)**

An acryl-based binder was prepared in the same manner as in Synthesis Example 1, with a difference that acrylic acid (28.80 g, 0.40 mol), 2-hydroxyethyl methacrylate (13.00 g, 0.10 mol), and 2-acrylamido-2-methylpropane sulfonic acid (103.60 g, 0.5 mol) were used.

The non-volatile component of the reaction solution was 9.7wt% (theoretical value: 10wt%). In addition, in the poly(acrylic acid-co-2-hydroxyethyl methacrylate-co-2-acrylamido-2-methylpropane sulfonic acid) lithium salt acquired here, the first structural unit derived from acrylic acid, the second structural unit derived from 2-hydroxyethyl methacrylate, and the third structural unit derived from 2-acrylamido-2-methylpropane sulfonic acid were included in a molar ratio of 40:10:50.

**Synthesis Example 3: Poly(acrylic acid-co-2-hydroxyethyl methacrylate-co-2-acrylamido-2-methylpropane sulfonic acid) lithium salt (60:10:30)**

An acryl-based copolymer was prepared in the same manner as in Synthesis Example 1, with a difference that acrylic acid (43.20 g, 0.60 mol), 2-hydroxyethyl methacrylate (13.00 g, 0.10 mol), and 2-acrylamido-2-methylpropane sulfonic acid (62.20 g, 0.30 mol) were used.

The non-volatile component of the reaction solution was 9.7wt% (theoretical value: 10wt%). In addition, in the poly(acrylic acid-co-2-hydroxyethyl methacrylate-co-2-acrylamido-2-methylpropane sulfonic acid) lithium salt acquired here, the first structural unit derived from acrylic acid, the second structural unit derived from 2-hydroxyethyl methacrylate, and the third structural unit derived from 2-acrylamido-2-methylpropane sulfonic acid were included in a molar ratio of 60:10:30.

**Synthesis Example 4: Poly(acrylic acid-co-2-hydroxyethyl methacrylate-co-2-acrylamido-2-methylpropane sulfonic acid) lithium salt (40:5:55)**

An acryl-based binder was prepared in the same manner as in Synthesis Example 1, with a difference that acrylic acid (28.80 g, 0.40 mol), 2-hydroxyethyl methacrylate (6.500 g, 0.05 mol), and 2-acrylamido-2-methylpropane sulfonic acid (114.00 g, 0.55 mol) were used.

The non-volatile component of the reaction solution was 9.8wt% (theoretical value: 10wt%). In addition, in the poly(acrylic acid-co-2-hydroxyethyl methacrylate-co-2-acrylamido-2-methylpropane sulfonic acid) lithium salt acquired here, the first structural unit derived from acrylic acid, the second structural unit derived from 2-hydroxyethyl methacrylate, and the third structural unit derived from 2-acrylamido-2-methylpropane sulfonic acid were included in a molar ratio of 40:5:55.

**Synthesis Example 5: Poly(acrylic acid-co-2-hydroxyethyl methacrylate-co-2-acrylamido-2-methylpropane sulfonic acid) lithium salt (40:15:45)**

An acryl-based copolymer was prepared in the same manner as in Synthesis Example 1, with a difference that acrylic acid (28.80 g, 0.40 mol), 2-hydroxyethyl methacrylate (19.50 g, 0.15 mol), and 2-acrylamido-2-methylpropane sulfonic acid (93.30 g, 0.45 mol) were used.

The non-volatile component of the reaction solution was 9.8wt% (theoretical value: 10wt%). In addition, in the poly(acrylic acid-co-2-hydroxyethyl methacrylate-co-2-acrylamido-2-methylpropane sulfonic acid) lithium salt acquired here, the first structural unit derived from acrylic acid, the second structural unit derived from 2-hydroxyethyl methacrylate, and the third structural unit derived from 2-acrylamido-2-methylpropane sulfonic acid were included in a molar ratio of 40:15:45.

**Comparative Synthesis Example 1: Poly(acrylic acid-co-2-hydroxyethyl methacrylate) lithium salt (42:58)**

A (meth)acryl-based binder was prepared in the same manner as in Synthesis Example 1, with a difference that acrylic acid and 2-hydroxyethyl methacrylate were used without 2-acrylamido-2-methylpropane sulfonic acid, and in the poly(acrylic acid-co-2-hydroxyethyl methacrylate) lithium salt acquired here, the first structural unit derived from acrylic acid and the second structural unit derived from 2-hydroxyethyl methacrylate were included in a molar ratio of 42:58.

**Comparative Synthesis Example 2: Poly(acrylic acid-co-2-acrylamido-2-methylpropane sulfonic acid) lithium salt (74:26)**

A (meth)acryl-based binder was prepared in the same manner as in Synthesis Example 1, with a difference that acrylic acid and 2-acrylamido-2-methylpropane sulfonic acid were used without 2-hydroxyethyl methacrylate, and in the poly(acrylic acid-co-2-acrylamido-2-methylpropane sulfonic acid) lithium salt acquired here, the first structural unit derived from acrylic acid and the third structural unit derived from 2-acrylamido-2-methylpropane sulfonic acid were included in a molar ratio of 74:26.

**Comparative Synthesis Example 3: Poly(2-hydroxyethyl methacrylate-co-2-acrylamido-2-methylpropane sulfonic acid) lithium salt (74:26)**

A (meth)acryl-based binder was prepared in the same manner as in Synthesis Example 1, with a difference that 2-hydroxyethyl methacrylate and 2-acrylamido-2-methylpropane sulfonic acid were used without acrylic acid, and in the poly(2-hydroxyethyl methacrylate-co-2-acrylamido-2-methylpropane sulfonic acid) lithium salt acquired here, the second structural unit derived from 2-hydroxyethyl methacrylate and the third structural unit derived from 2-acrylamido-2-methylpropane sulfonic acid were included in a molar ratio of 74:26.

**Example 1**

An inorganic dispersion was prepared by dispersing an aqueous binder solution (10 wt% in distilled water) including the binder of Synthesis Example 1 and boehmite (cubic, average particle diameter D50= 0.2 μm, specific surface area: 16 $m^2/g$) in water in a weight ratio of 1:20 and then milling and dispersing the binder at 25 °C for 30 minutes using a bead mill. A composition for a coating layer was prepared by adding water and mixing the binder of Synthesis Example 1 so that the total solid content was 20 wt%. A separator was manufactured by coating both surfaces of a 5.5 μm thick polyethylene porous substrate (CZMZ Company, air permeability: 110 sec/100 cc, puncture strength: 360 kgf) with the prepared composition for a coating layer to thicknesses of 0.9 μm and 1.1 μm using a die coating method and then drying the coating layer at 70 °C for 10 minutes.

A positive electrode active material slurry was prepared by mixing $LiNi_{0.75}Mn_{0.23}Al_{0.02}O_2$ as a positive electrode active material, polyvinylidene fluoride as a binder, and acetylene black as a conductive material in a weight ratio of 96:3:1 and dispersing the mixture in N-methyl pyrrolidone.

A positive electrode was manufactured by coating the positive electrode active material slurry on a 15 μm thick Al foil, drying, and then rolling the positive electrode active material slurry at 100 °C.

As a negative electrode active material, a mixture of artificial graphite and Si-C composite in a weight ratio of 93:7 was used, and a negative electrode active material slurry was prepared by mixing the negative electrode active material, a styrene-butadiene rubber binder, and carboxymethyl cellulose in a weight ratio of 98:1:1 and dispersing the mixture. The Si-C composite used a core including artificial graphite and silicon particles and carbonyl pitch coated on a surface of the core.

A negative electrode was manufactured by coating the negative electrode active material slurry on a 10 μm thick Cu foil, drying, and then rolling the negative electrode active material slurry at 100 °C.

An electrode assembly jelly roll was manufactured by assembling the positive electrode, the negative electrode, and the manufactured separator. The jelly roll was inserted into a pouch, an electrolyte was injected, and then the pouch was vacuum sealed. Here, the electrolyte is 1M $LiPF_6$ dissolved in a non-aqueous organic solvent in which ethylene carbonate (EC) and ethyl methyl carbonate (EMC) are mixed in a volume ratio of 3:7.

The jelly roll inserted into the pouch was pre-charged to 50% of a state of charge (SOC) while applying a pressure of 250 $kgf/cm^2$ to the jelly roll and thermally softening the jelly roll at a temperature of 70 °C for 1 hour.

Subsequently, gas was removed from the pouch (degassing), and the jelly roll was charged at a constant current of 0.2 C rate at a temperature of 45 °C for 1 hour while applying a pressure of 200 $kgf/cm^2$ until a voltage reached 4.3 V, maintained at 4.3 V, and charged at a constant voltage until the current reached 0.05 C. Subsequently, a formation process was performed by repeating a discharge cycle at a constant current of 0.2 C 5 times until the voltage reached 3.0 V.

FIGS. 8A and 8B show the SEM results for a coating layer of a separator in Example 1. FIG. 8A shows the result

with 10x magnification, and FIG. 8B shows the result with 20x magnification. Referring to FIGS. 8A and 8B, it can be seen that the packing density of the coating layer is high.

**Example 2**

A separator for a rechargeable lithium battery and a rechargeable lithium battery were manufactured in the same manner as in Example 1, with a difference that the binder of Synthesis Example 2 was used instead of the binder of Synthesis Example 1.

**Example 3**

A separator for a rechargeable lithium battery and a rechargeable lithium battery were manufactured in the same manner as in Example 1, with a difference that the binder of Synthesis Example 3 was used instead of the binder of Synthesis Example 1.

**Example 4**

A separator for a rechargeable lithium battery and a rechargeable lithium battery were manufactured in the same manner as in Example 1, with a difference that the binder of Synthesis Example 4 was used instead of the binder of Synthesis Example 1.

**Example 5**

A separator for a rechargeable lithium battery and a rechargeable lithium battery were manufactured in the same manner as in Example 1, with a difference that the binder of Synthesis Example 5 was used instead of the binder of Synthesis Example 1.

**Example 6**

An inorganic dispersion was prepared by dispersing an aqueous binder solution (10 wt% in distilled water) including the binder of Synthesis Example 1 and boehmite (cubic, average particle diameter D50= 0.2 μm, specific surface area: 16 $m^2/g$) in water, dispersing boehmite (amorphous, average particle diameter D50= 0.3 μm, specific surface area: 18 $m^2/g$) in water, and then milling and dispersing the binder at 25 °C for 30 minutes using a bead mill.

In the dispersion, the binder and the cubic boehmite were included in a weight ratio of 1:20, and the binder and the amorphous boehmite were included in a weight ratio of 1:20.

A composition for a coating layer was prepared by adding water so that the total solid content was 20 wt%. A separator was manufactured by coating both surfaces of a 5.5 μm thick polyethylene porous substrate (CZMZ Company, air permeability: 110 sec/100 cc, puncture strength: 360 kgf) with the prepared composition for a coating layer to thicknesses of 0.9 μm and 1.1 μm using a die coating method and then drying the coating layer at 70 °C for 10 minutes. A rechargeable lithium battery was manufactured in the same manner as in Example 1.

**Comparative Example 1**

A separator for a rechargeable lithium battery and a rechargeable lithium battery were manufactured in the same manner as in Example 1, with a difference that the binder of Comparative Synthesis Example 1 was used instead of the binder of Synthesis Example 1.

**Comparative Example 2**

A separator for a rechargeable lithium battery and a rechargeable lithium battery were manufactured in the same manner as in Example 1, with a difference that the binder of Comparative Synthesis Example 2 was used instead of the binder of Synthesis Example 1.

**Comparative Example 3**

A separator for a rechargeable lithium battery and a rechargeable lithium battery were manufactured in the same manner as in Example 1, with a difference that the binder of Comparative Synthesis Example 3 was used instead of the binder of Synthesis Example 1.

**Comparative Example 4**

A separator and a rechargeable lithium battery were manufactured in the same manner as in Example 1, with a difference that boehmite (amorphous, average particle diameter D50= 0.3 μm) was used instead of boehmite (cubic, average particle diameter D50= 0.2 μm). FIG. 9A shows the result with 10x magnification, and FIG. 9B shows the result with 20x magnification. Referring to FIGS. 9A and 9B, it can be seen that the packing density of the heat-resistant coating layer was not as high as that in FIGS. 8A and 8B.

The separators according to Examples and Comparative Examples were evaluated by the following methods, and the evaluation results are shown in Table 1 below.

(1) Coating density (units: $g/cm^3$)

A thickness (a) and a unit weight (b) of a fabric before coating were measured. A coating thickness and weight were measured by measuring a total thickness (c) and a unit weight (d) after coating. A coating density was measured by dividing the coating weight by the thickness.

$$\text{Coating thickness (e)} = c - a$$

$$\text{Coating weight (f)} = d - b$$

$$\text{Coating density} = f / e$$

(2) Δ Air permeability (units: sec/100 cc)

The air permeability of a polyethylene porous substrate before coating a composition for a coating layer was measured by the following method. The air permeability of the manufactured separator was measured by the following method. A difference therebetween was expressed by Δ air permeability.

Measurement for air permeability: Samples were manufactured by cutting the separator so that a cross-sectional area was 1 $inch^2$, and the time (seconds) it took for 100 cc of air to pass through the sample was measured using a densometer according to an ASTM D 726-94 test method.

(3) Heat shrinkage rate (units:%)

Sample were manufactured by cutting the separator into a size of 10 cm (machine direction, MD)×10 cm (transverse direction, TD), and drawing a square with a size of 8 cm×8 cm on surfaces of the samples, then putting the samples between pieces of paper or alumina powder, and leaving the samples in an oven at 150 °C for 1 hour.

Then, a shrinkage rate in each of the MD and the TD was calculated according to Equation 1 below by taking the samples out and comparing the samples with the previously drawn square with the size of 10 cm (machine direction, MD)×10 cm (transverse direction, TD).

heat shrinkage rate = (initial length - length after heat shrinkage treatment)/(initial length): × 100 Equation 1:

(4) Membrane resistance when impregnated with electrolyte (units: Ω)

Membrane resistance was evaluated by electrochemical impedance spectroscopy (EIS) resistance. Samples were manufactured by cutting the separator into a size of 10 cm×10 cm, the samples were impregnated with an electrolyte in which 1.5M $LiPF_6$ was dissolved in a mixed solvent of ethylene carbonate, ethyl methyl carbonate, and dimethyl carbonate (volume ratio of 2:1:7), test cells were manufactured by inserting the impregnated sample into a lead tab-attached aluminum foil electrode and sealing the test cells in an aluminum pack, and the resistance (Ω) of these test cells was measured by an alternating impedance method (measurement frequency 100 kHz) at 20 °C.

(5) Moisture content (units: ppm/g)

A moisture content was evaluated by taking the jelly roll out of the pouch and separating the separator. In this case, the moisture content was measured according to the Karl-Fischer method.

Table 1:

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Binder | Synthes is Exampl e 1 | Synthes is Exampl e 2 | Synthes is Exampl e 3 | Synthes is Exampl e 4 | Synthes is Exampl e 5 | Synthes is Exampl e 1 | Comparati ve Synthesis Example 1 | Comparati ve Synthesis Example 2 | Comparati ve Synthesis Example 3 | Synthes is Exampl e 1 |
| First filler (Cubic) | 1:20 | 1:20 | 1:20 | 1:20 | 1:20 | 1:20 | 1:20 | 1:20 | 1:20 | 0 |
| Second filler (amorphou s) | 0 | 0 | 0 | 0 | 0 | 1:20 | 0 | 0 | 0 | 1:20 |
| Coating density | 1.71 | 1.73 | 1.68 | 1.70 | 1.65 | 1.40 | 1.65 | 1.67 | 1.65 | 1.34 |
| Δ air permeabili ty | 12 | 11 | 12 | 12 | 11 | 10 | 13 | 12 | 12 | 10 |
| Heat shrinkage rate (MD/TD) | 1.5/1.1 | 2.2/2.5 | 2.1/3.2 | 1.5/1.5 | 2.5/2.5 | 2.5/2.5 | 3.5/3.2 | 3.1/3.3 | 3.5/3.0 | 4.3/6.0 |
| Resistance when im- pregnate d with elec- trolyte | 0.5 | 0.55 | 0.6 | 0.52 | 0.56 | 0.48 | 0.67 | 0.81 | 0.82 | 0.47 |
| Moisture content | 982 | 945 | 965 | 980 | 972 | 813 | 980 | 975 | 968 | 753 |

As shown in Table 1, the separators in the Examples exhibited a low membrane resistance and a low heat shrinkage rate.

A separator for a rechargeable lithium battery according to one example embodiment can exhibit low membrane resistance and a low heat shrinkage rate, thereby increasing the capability, stability, and lifetime of the battery.

## Claims

1. A separator (30) for a rechargeable lithium battery (100), the separator comprising:

   a porous substrate (1); and
   a coating layer (2) located on at least one surface of the porous substrate and including a binder (4) and an inorganic filler (3),
   wherein the binder includes a (meth)acryl-based binder including a first structural unit derived from (meth)acrylic acid, (meth)acrylate, or a salt thereof, a second structural unit derived from hydroxyalkyl (meth)acrylate, and a third structural unit derived from (meth)acrylamido sulfonic acid or a salt thereof, and
   the inorganic filler includes a first inorganic filler that has an average particle diameter D50 ranging from 50 nm to 250 nm measured by a laser diffraction method and is substantially cubic.

2. The separator (30) of claim 1, wherein, with respect to 100 mol% of the (meth)acryl-based binder (4):

   the first structural unit is included in an amount ranging from 25 mol% to 65 mol%,
   the second structural unit is included in an amount ranging from 1 mol% to 20 mol%, and
   the third structural unit is included in an amount ranging from 20 mol% to 65 mol%.

3. The separator (30) of claim 1 or 2, wherein the first structural unit is represented by any one of Chemical Formulas 1 to 3,

   the second structural unit is represented by Chemical Formula 4, and
   the third structural unit is represented by Chemical Formulas 5 to 7:

Chemical Formula 1: Chemical Formula 2: Chemical Formula 3:

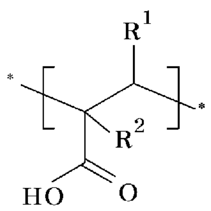
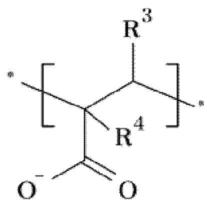
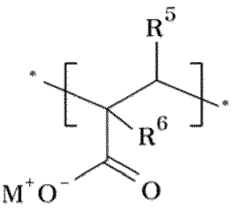

Chemical Formula 4:

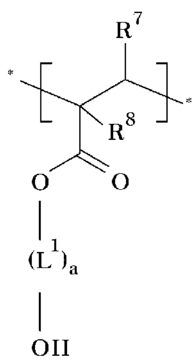

Chemical Formula 5: Chemical Formula 6: Chemical Formula 7:

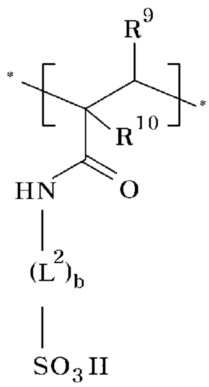

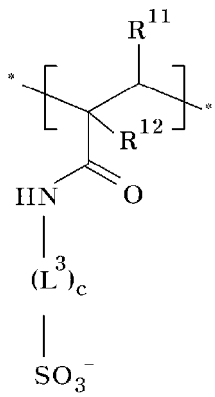

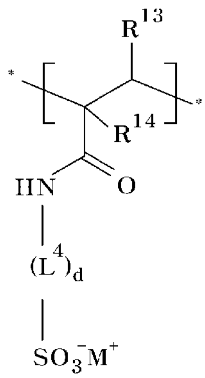

in Chemical Formulas 1 to 7,

$R^1$ to $R^{14}$ each independently comprises hydrogen or a C1 to C10 alkyl group,

$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,

a, b, c, and d are each independently an integer ranging from 0 to 2, and

M comprises an alkali metal,

wherein "substituted" indicates that hydrogen is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**4.** The separator (30) of any one of the preceding claims, wherein the (meth)acryl-based binder (4) is represented by Chemical Formula 8:

Chemical Formula 8:

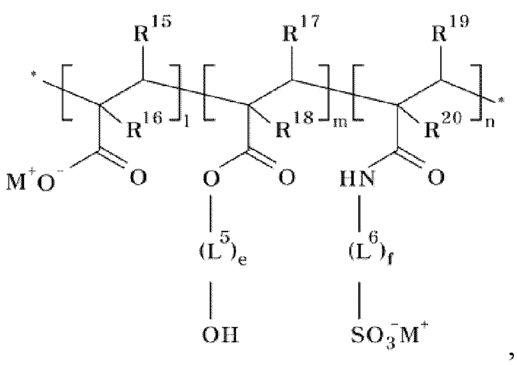

,

$R^{15}$ to $R^{20}$ each independently comprises hydrogen or a C1 to C10 alkyl group,

$L^5$ and $L^6$ each independently comprises a substituted or unsubstituted C1 to C10 alkylene group, a substituted or

unsubstituted C3 to C20 cycloalkylene group, a substituted or unsubstituted C6 to C20 arylene group, or a substituted or unsubstituted C3 to C20 heterocyclic group,
M comprises an alkali metal,
e and f are each independently an integer ranging from 0 to 2, and
l, m, and n are a molar ratio of each unit and l+m+n=1,
wherein "substituted" indicates that hydrogen is substituted with a substituent selected from a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group ($-NO_2$), a cyano group (-CN), an amino group (-NRR') (here, R and R' are each independently hydrogen or a C1 to C6 alkyl group), a sulfobetaine group ($-RR'N+(CH_2)_nSO_3-$, n is a natural number from 1 to 10), a carboxybetaine group ($-RR'N+(CH_2)_nCOO-$, n is a natural number from 1 to 10) (here, R and R' are each independently a C1 to C20 alkyl group), an azido group ($-N_3$), an amidino group ($-C(=NH)NH_2$), a hydrazino group ($-NHNH_2$), a hydrazono group ($=N(NH_2)$), a carbamoyl group ($-C(O)NH_2$), a thiol group (-SH), an acyl group (-C(=O)R, here, R denotes hydrogen, a C1 to C6 alkyl group, a C1 to C6 alkoxy group , or a C6 to C12 aryl group), a carboxyl group (-COOH) or a salt thereof (-C(=O)OM, here, M denotes an organic or inorganic cation), a sulfonic acid group ($-SO_3H$) or a salt thereof ($-SO_3M$, here, M denotes an organic or inorganic cation), and a phosphate group ($-PO_3H_2$) or a salt thereof ($-PO_3MH$ or $-PO_3M_2$, here, M denotes an organic or inorganic cation).

**5.** The separator (30) of claim 1, wherein, with respect to 100 mol% of the (meth)acryl-based binder (4), a total of the first structural unit, the second structural unit, and the third structural unit is equal to 95 mol% or more.

**6.** The separator (30) of any one of the preceding claims, wherein the (meth)acryl-based binder (4) and the first inorganic filler (3) are included in a mass ratio of 1:10 to 1:50.

**7.** The separator (30) of any one of the preceding claims, wherein the first inorganic filler (3) comprises at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, and boehmite.

**8.** The separator (30) of any one of the preceding claims, wherein the inorganic filler (3) further comprises a second inorganic filler, and the second inorganic filler has a larger average particle diameter D50 than the average particle diameter D50 of the first inorganic filler.

**9.** The separator (30) of claim 8, wherein the second inorganic filler has an average particle diameter D50 ranging from 100 nm to 350 nm measured by a laser diffraction method.

**10.** The separator (30) of claim 8 or 9, wherein the second inorganic filler is amorphous.

**11.** The separator (30) of any one of claims 8 to 10, wherein the (meth)acryl-based binder (4) and the second inorganic filler are included in a mass ratio in a range of 1:10 to 1:50.

**12.** The separator (30) of any one of claims 8 to 11, wherein the second inorganic filler comprises at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, and boehmite.

**13.** The separator (30) of any one of claims 8 to 12, wherein the first inorganic filler (3) and the second inorganic filler are included in a part by weight ratio of 20 to 80 : 80 to 20 with respect to a total of 100 parts by weight of the first inorganic filler and the second inorganic filler.

**14.** The separator (30) of any one of the preceding claims, wherein the coating layer (2) has a thickness ranging from 0.5 $\mu$m to 2 $\mu$m.

**15.** A rechargeable lithium battery (100) comprising:

a positive electrode (10);
a negative electrode (20); and
the separator (30) of any one of the preceding claims located between the positive electrode and the negative electrode.

FIG 1.

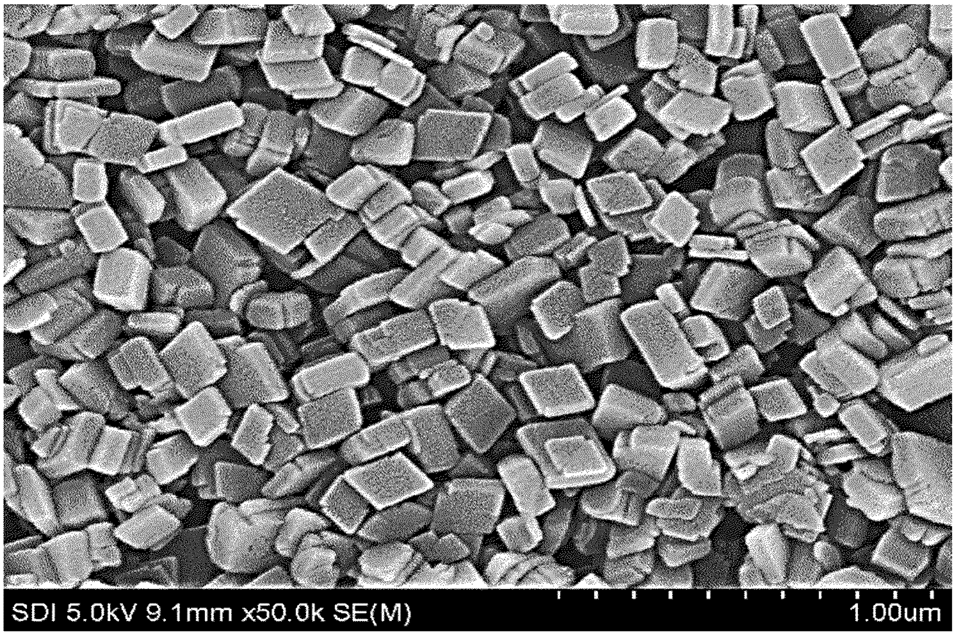


FIG 2.

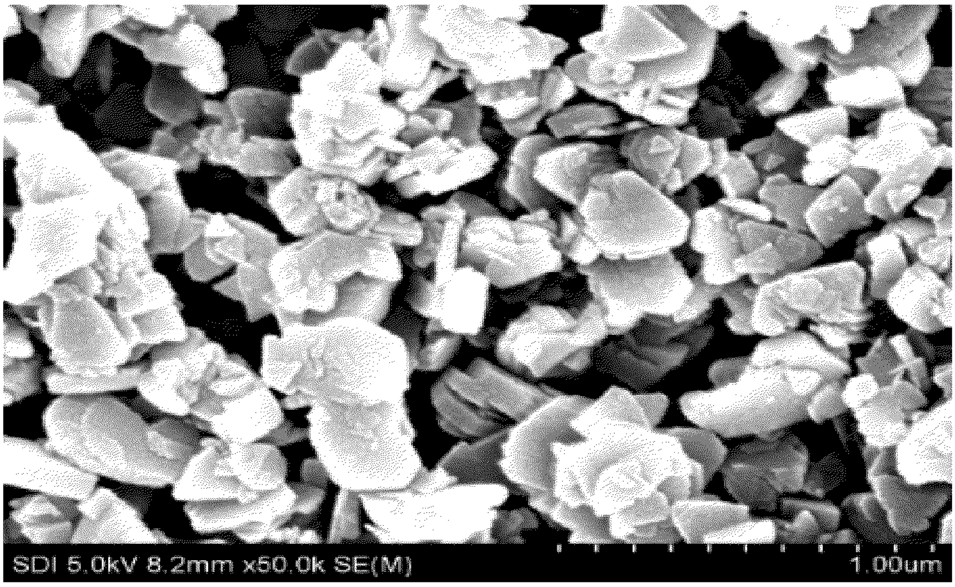

FIG 3.

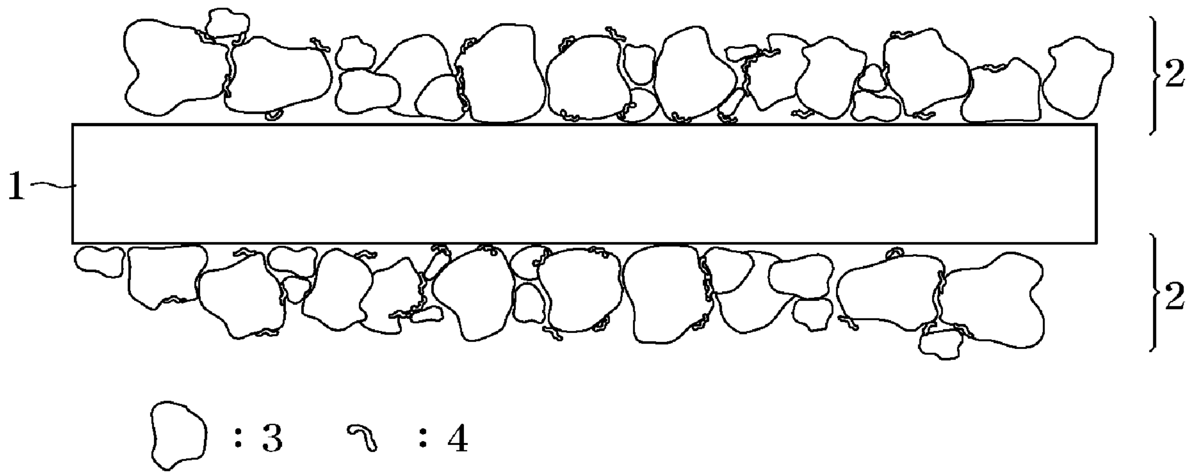

FIG 4.

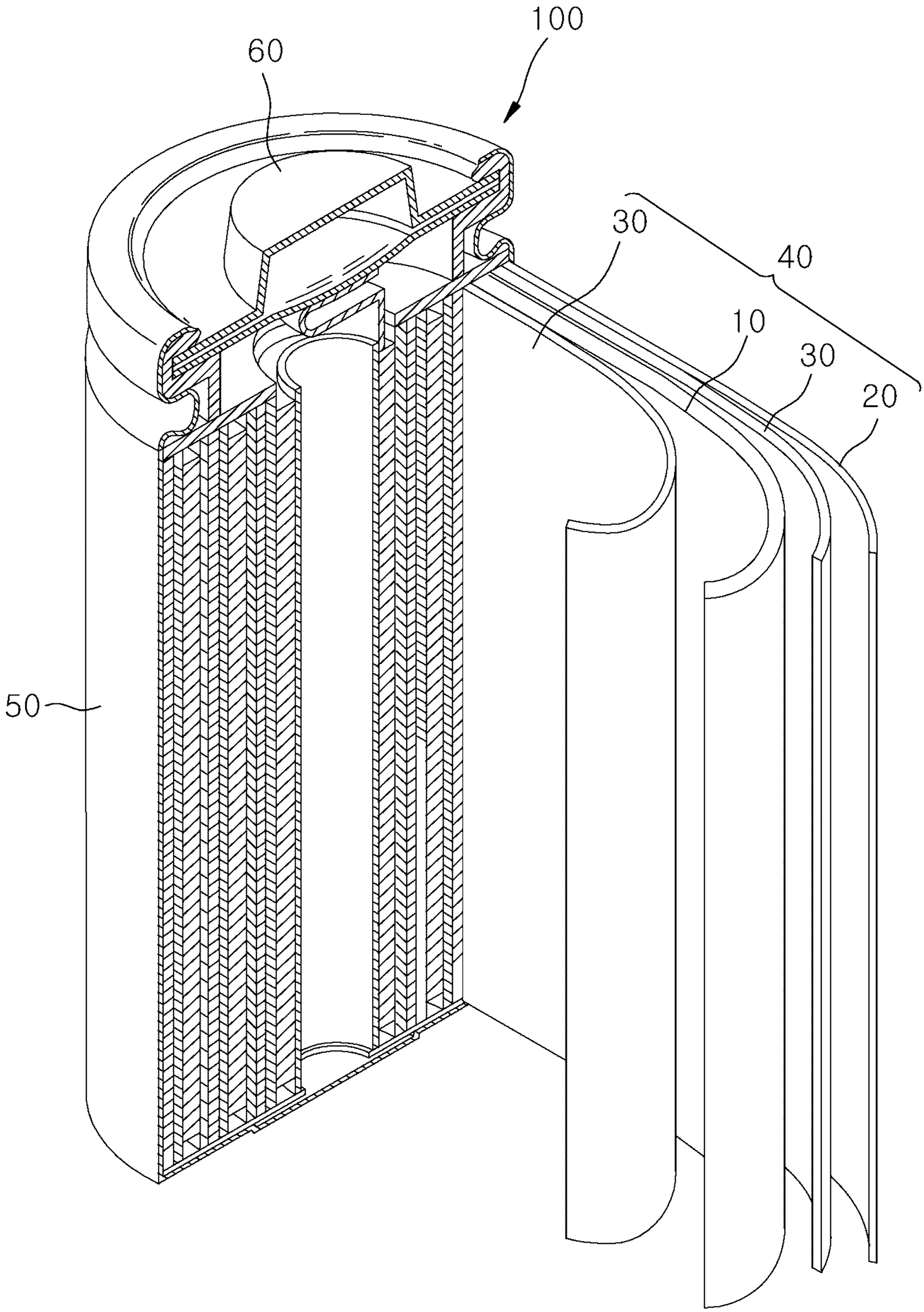

FIG 5.

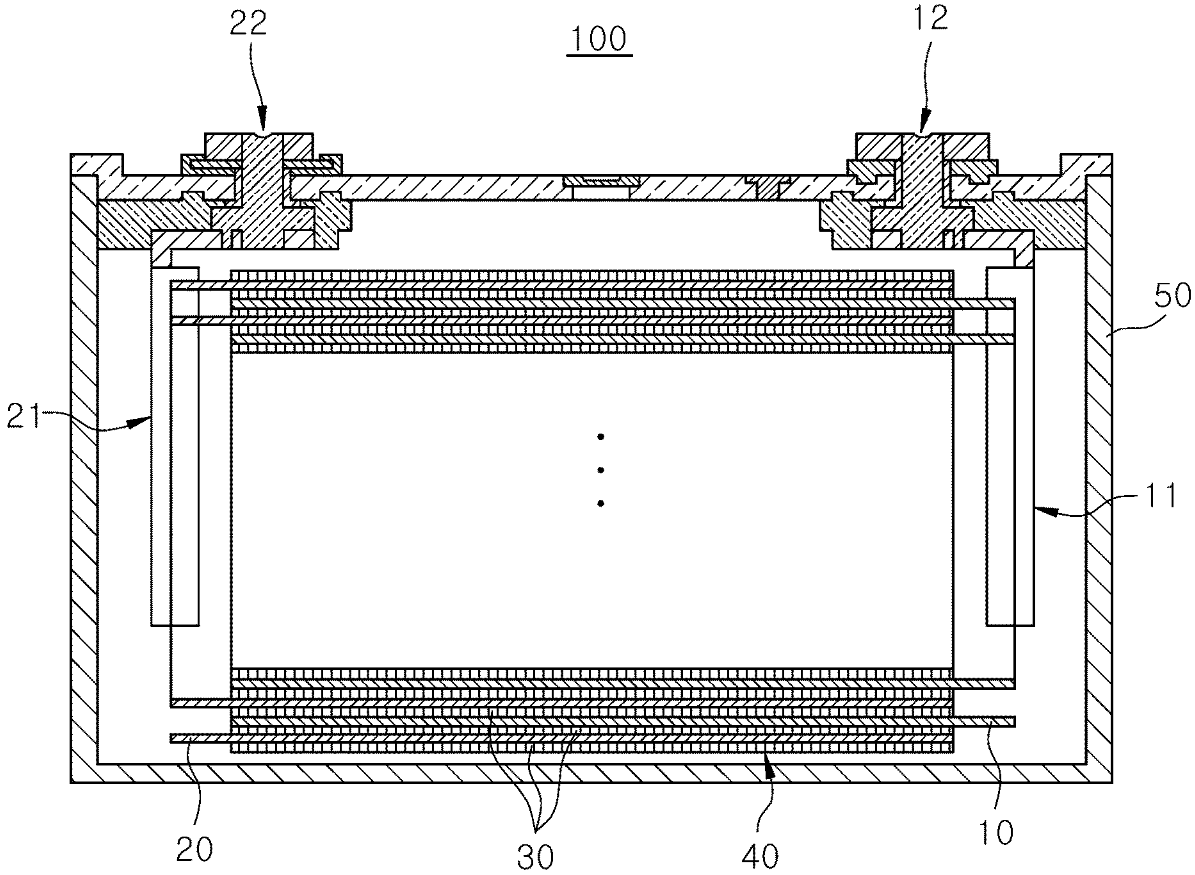

FIG 6.

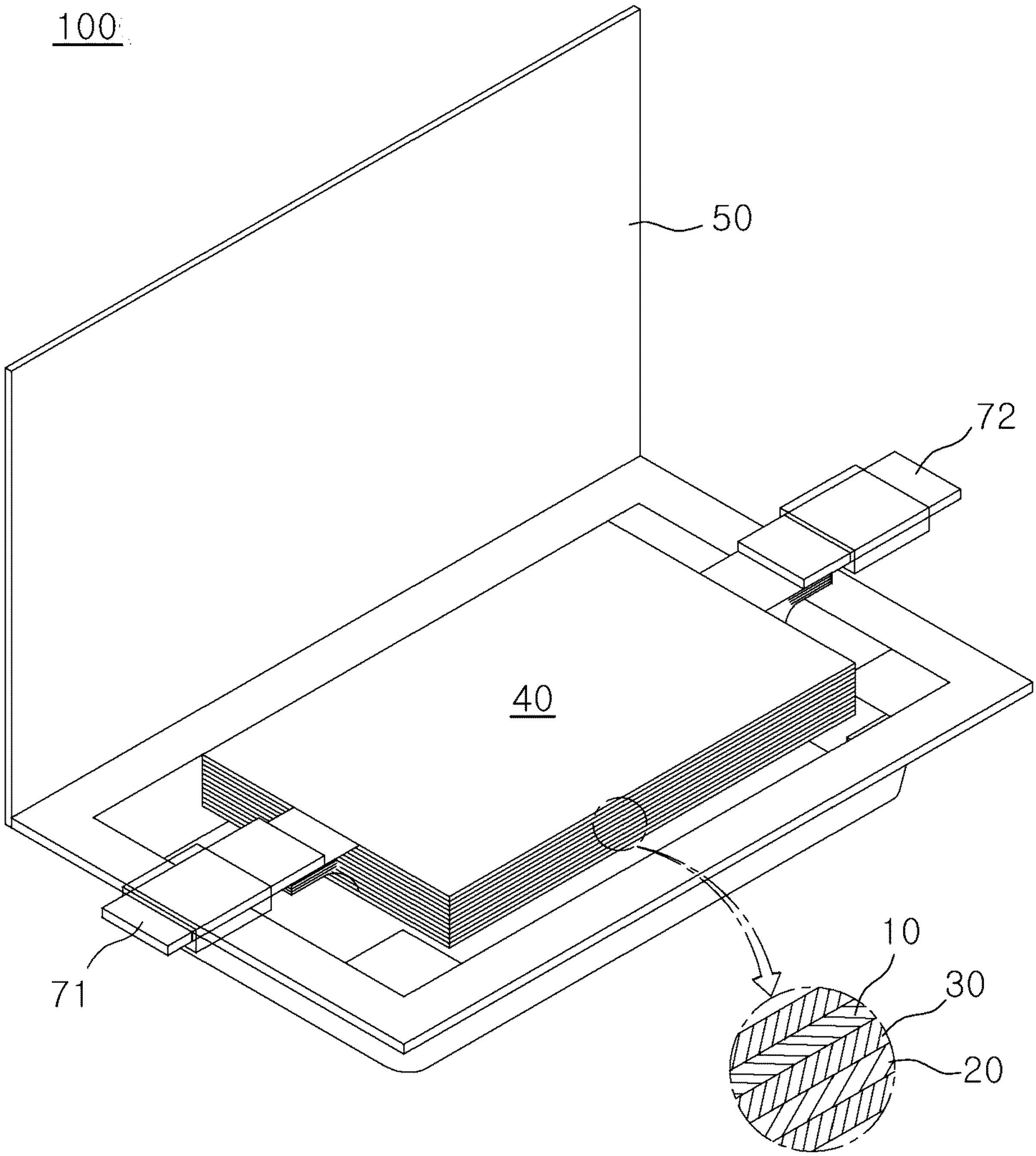

FIG 7.

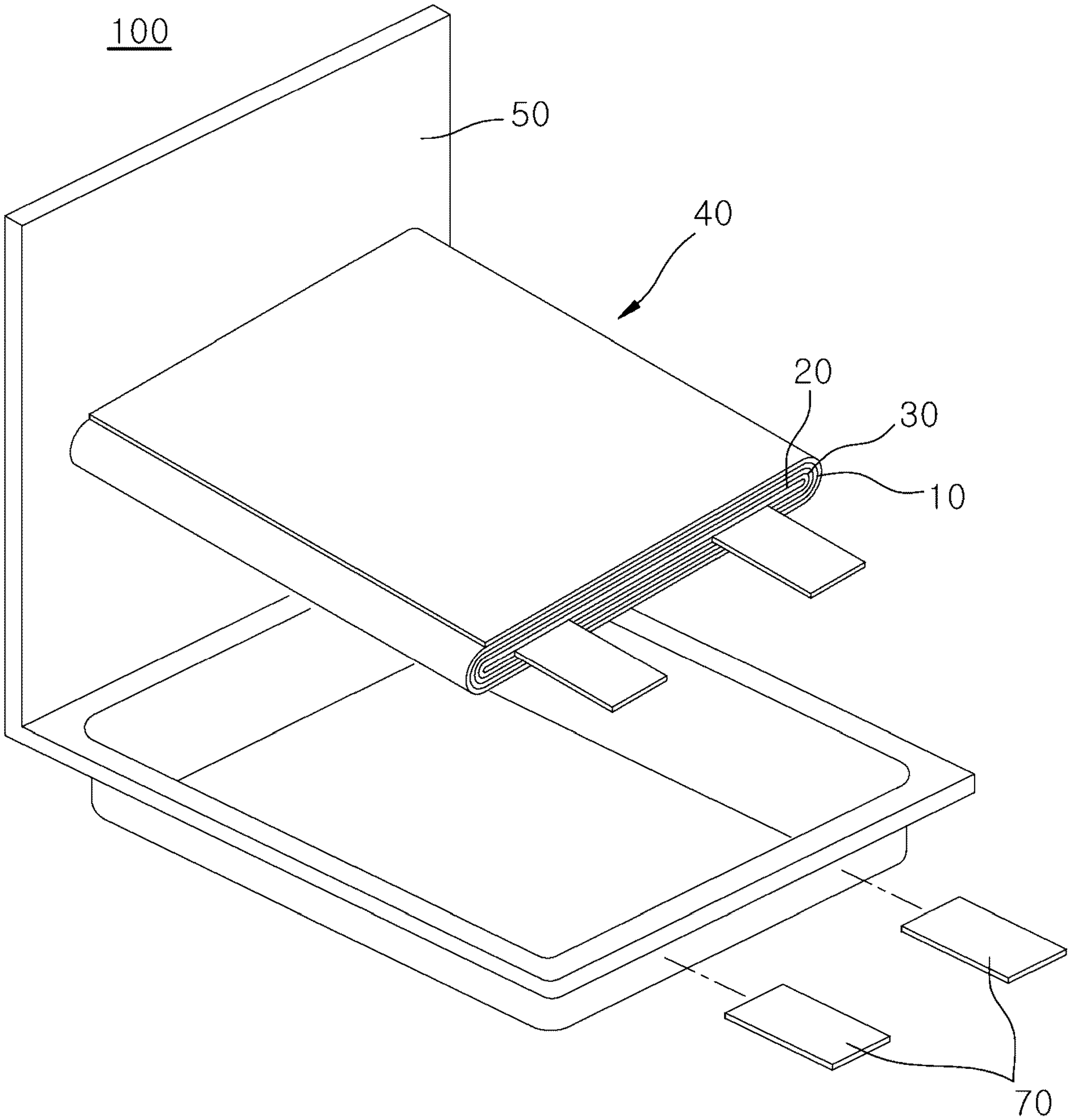

FIG 8A

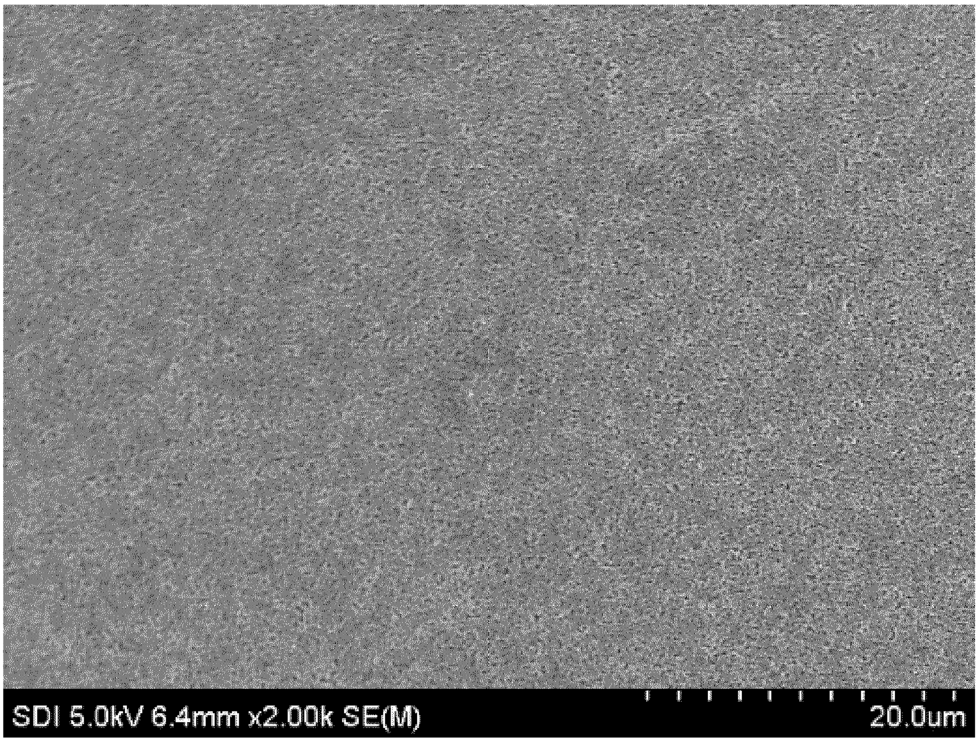

FIG 8B

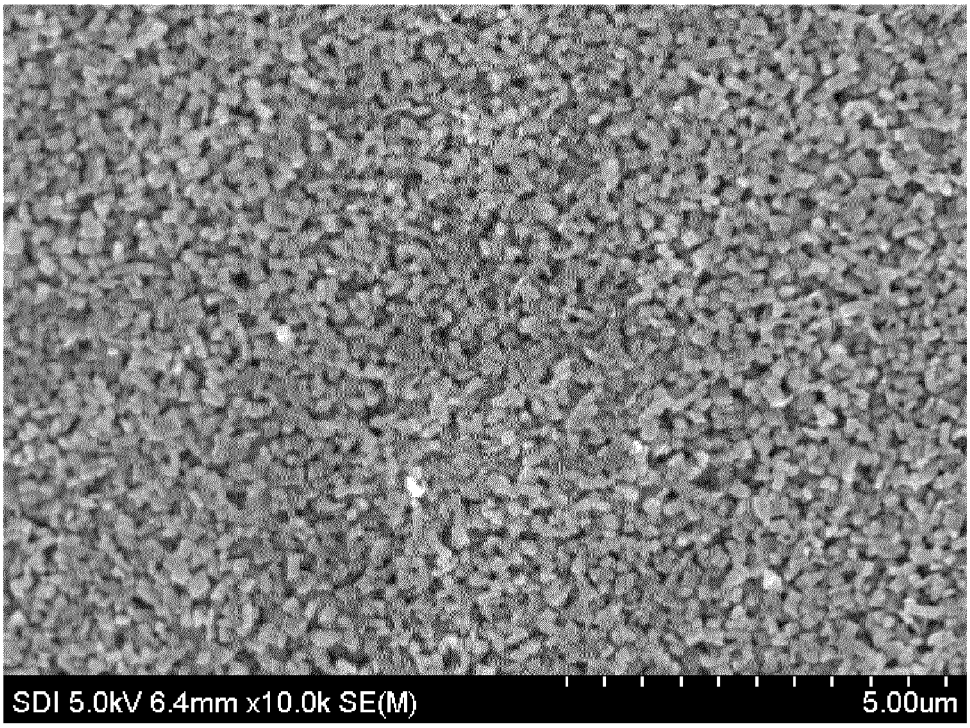

**FIG** 9A

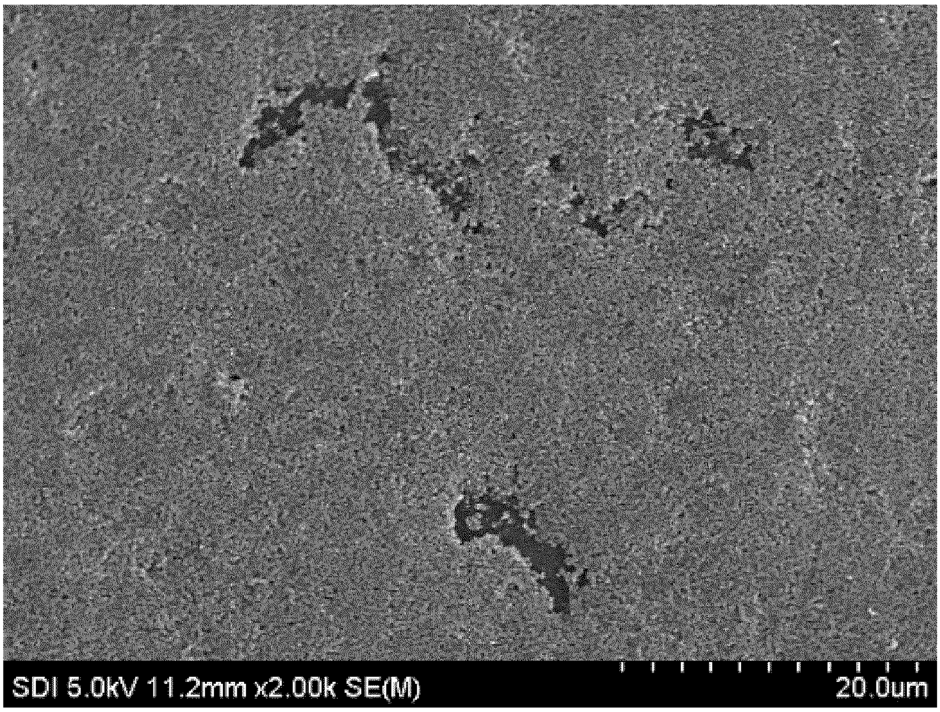

**FIG** 9B

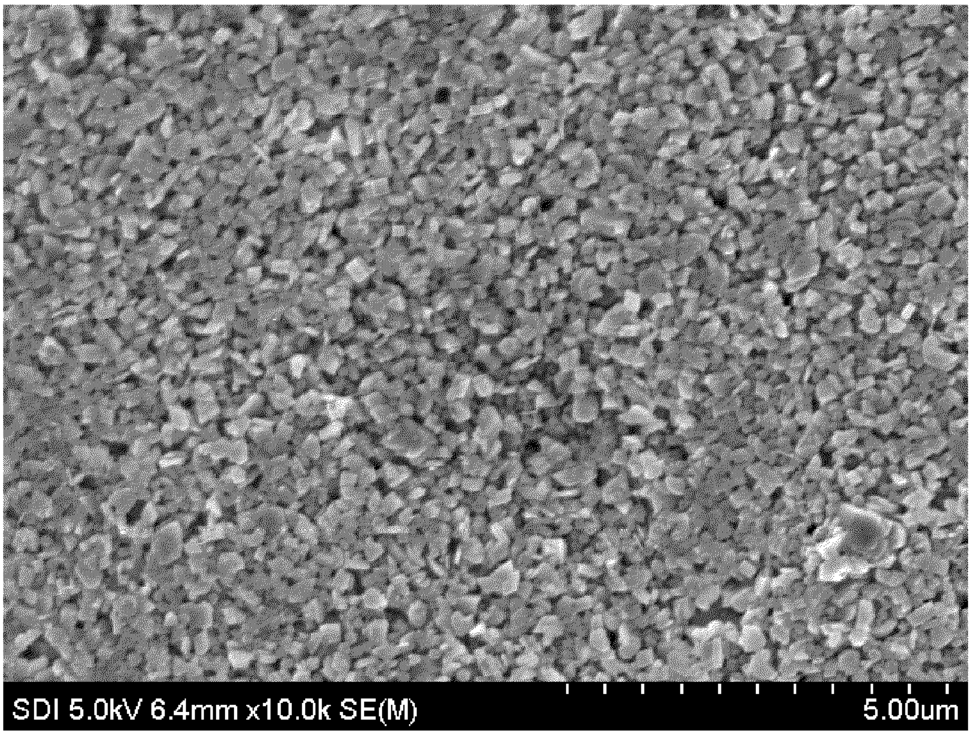

Europäisches Patentamt
European Patent Office
Office européen des brevets

# EUROPEAN SEARCH REPORT

Application Number
EP 25 16 8492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 2023/189442 A1 (ZEON CORP [JP]) 5 October 2023 (2023-10-05)<br>* abstract * *<br>& US 2025/206976 A1 (MATSUNO HIROHIKO [JP]) 26 June 2025 (2025-06-26)<br>* paragraphs [0027], [0103], [0111], [0136], [0221] - [0236]; table 1 *<br>----- | 1,2,5-15<br><br>1 | INV.<br>H01M10/052<br>H01M50/42<br>H01M50/443<br>H01M50/449 |
| A | US 2021/320378 A1 (LEE JUNGYOON [KR] ET AL) 14 October 2021 (2021-10-14)<br>* paragraphs [0047] - [0073] *<br>----- | 1-15 | |
| Y | KR 101 785 535 B1 (LG CHEMICAL LTD [KR]) 16 October 2017 (2017-10-16)<br>* paragraphs [0046], [0047]; table 1 *<br>----- | 1 | |

TECHNICAL FIELDS SEARCHED (IPC)

H01M

The present search report has been drawn up for all claims

| Place of search | Date of completion of the search | Examiner |
|---|---|---|
| The Hague | 25 August 2025 | Standaert, Frans |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 16 8492

This annex lists the patent family members relating to the patent documents cited in the above-mentioned European search report. The members are as contained in the European Patent Office EDP file on
The European Patent Office is in no way liable for these particulars which are merely given for the purpose of information.

25-08-2025

| Patent document cited in search report | Publication date | Patent family member(s) | Publication date |
|---|---|---|---|
| WO 2023189442 A1 | 05-10-2023 | CN 118843979 A | 25-10-2024 |
| | | EP 4503300 A1 | 05-02-2025 |
| | | JP WO2023189442 A1 | 05-10-2023 |
| | | KR 20240168947 A | 02-12-2024 |
| | | US 2025206976 A1 | 26-06-2025 |
| | | WO 2023189442 A1 | 05-10-2023 |
| US 2021320378 A1 | 14-10-2021 | CN 113540690 A | 22-10-2021 |
| | | EP 3896782 A2 | 20-10-2021 |
| | | KR 20210126992 A | 21-10-2021 |
| | | US 2021320378 A1 | 14-10-2021 |
| | | US 2025096415 A1 | 20-03-2025 |
| KR 101785535 B1 | 16-10-2017 | NONE | |

EPO FORM P0459

For more details about this annex : see Official Journal of the European Patent Office, No. 12/82